# EUROPEAN PATENT APPLICATION

(11) **EP 0 838 935 A2**
(43) Date of publication of application: **29.04.1998**
(21) Application number: 97118473.4
(22) Date of filing: 23.10.1997
(51) Int. Cl.: H04M 3/50

(54) **On demand mailbox creation for messaging systems**

(30) Priority: 23.10.1996 US 735945
(71) Applicant: AT&T Corp., New York, NY 10013-2412 (US)
(72) Inventor: Rochkind, Mark Meier, Morristown, New Jersey 07960 (US)
(74) Representative: Modiano, Guido, Dr.-Ing.

(57) **Abstract**

A messaging system has a memory device, an external interface, and a controller coupled to the memory device and the external interface. If the controller receives a message from a calling party for a called party through the external interface, and the called party does not have a mailbox, then the controller creates a called party mailbox and stores the message in the called party mailbox. After saving the message in the called party mailbox, the controller alerts the called party of the existence of a message saved in the called party mailbox. The called party may call the messaging system to retrieve a message stored in the called party mailbox and may also send a reply message to the calling party. A mailbox will also be created for calling parties who wish to send store and forward messages to called parties. The messaging system provides calling parties with the ability to send or leave a message for any called party irrespective of whether the called party is a customer of the messaging service. The dynamic creation of mailboxes described maximizes the size of the messaging community, minimizes the investment required, and avoids unnecessary degradation to system performance.

## Description

### 1. Field of the Invention

This invention relates to establishing mailboxes for messaging systems.

### 2. Background of the Invention

Conventional messaging systems are deployed either by pre-establishing mailboxes for all prospective users or by establishing mailboxes for users as they subscribe to the messaging service. In the first case, all prospective users are immediately served. However, pre-establishing mailboxes for all prospective users requires an up-front investment in system capacity. Also, the establishment of a large number of mailboxes in a messaging system results in a sizable database and the repetitive searching of the database can have a negative impact on system performance. When such mailboxes are actively used, an economic solution may be devised to address this performance impact. However, when mailboxes are pre-established, a likely result would be that many of the mailboxes will remain unused. In this undesirable "unused mailbox" situation, there is no recourse for the negative impact on system performance.

In the second case where mailboxes are established as users subscribe to the messaging service, the user community which is served will be greatly restricted. A restricted user community renders the messaging service less useful because messages may not be sent to non-subscribers. Thus, there is a need for a messaging system that provides the widest possible user community without pre-establishing mailboxes for all possible users.

### SUMMARY OF THE INVENTION

The messaging system of the present invention provides a messaging service that permits messages to be stored for all prospective users of the messaging system. If a called party does not answer a call or is already engaged with another party (i.e. the line is busy), the calling party may leave a message for the called party even if the called party knows nothing about the messaging service, is not a customer of the service, and does not have a mailbox. When a called party mailbox is not found, the messaging system creates a new called party mailbox in real time (dynamically) and stores the calling party's message in the called party mailbox.

After storing a message in the newly created mailbox, the messaging system alerts the called party that a message has been left and that the message can be retrieved by the called party. If a messaging system uses home telephone numbers for mailbox addresses, the messaging system may alert the called party, via an outcall for example, and allow the called party to retrieve the message which was left by the calling party and stored in the mailbox.

Alternatively, such an outcall can inform the called party of an access number which can be used by the called party to connect with the newly created mailbox so that the called party may retrieve the message stored in the mailbox. Messages subsequently stored may also be similarly retrieved. Thus, through no overt action, the called party acquires a mailbox making the called party an active member of the messaging community.

Once a mailbox is established and a party becomes an owner of the mailbox, the owner may be alerted of messages in the mailbox via any number of different signalling schemes such as paging, stutter dialtone, and message waiting light. The owner may then engage in messaging by sending messages or replying to messages received.

If a called party sends a store-and-forward reply message to the calling party and the calling party does not have a mailbox, a mailbox will also be created for the calling party. Thus, through active messaging, a network of mailboxes representing a community of messaging users is created. If telephone numbers are used, the destination information associated with a store-and-forward message may be a telephone number, a list of telephone numbers, or names of persons or distribution lists contained in a telephone directory. If telephone numbers are not used as mailbox addresses, similar functions may be implemented using an equivalent system that creates mailboxes and can uniquely identify a reachable individual.

Just as a mailbox may be created dynamically for a called party for whom no mailbox exists, a mailbox may be created dynamically for a calling party who wishes to send a store-and-forward message. In such an instance, the calling party calls the messaging system. When the messaging system discovers that no mailbox exists for the calling party, a mailbox is created and the calling party may then send a store-and-forward message to specified destinations.

The messaging system may not wish to attach message sending privileges to a newly created mailbox which results from an initial call from a calling party to the messaging system. The messaging system may first establish a billing relationship with the calling party. Thus, a message mailbox may always receive messages but may not always have message sending privileges.

The messaging system may be associated with local exchange carriers or long distance carriers. In either case, all the features of the messaging system are available.

### BRIEF DESCRIPTION OF THE DRAWINGS

The invention is described in detail with reference to the following drawings, wherein like numerals represent like elements:
Fig. 1 shows a block diagram of a telephone network that includes messaging systems;
Fig. 2 is a block diagram of a messaging system;
Fig. 3 is a flowchart of a process for a calling party to leave a message for a called party;
Fig. 4 is a flowchart of a process for a calling party to play messages from a mailbox; and
Fig. 5 is a flowchart for a calling party to send a message.

### DETAILED DESCRIPTION OF PREFERRED EMBODIMENTS

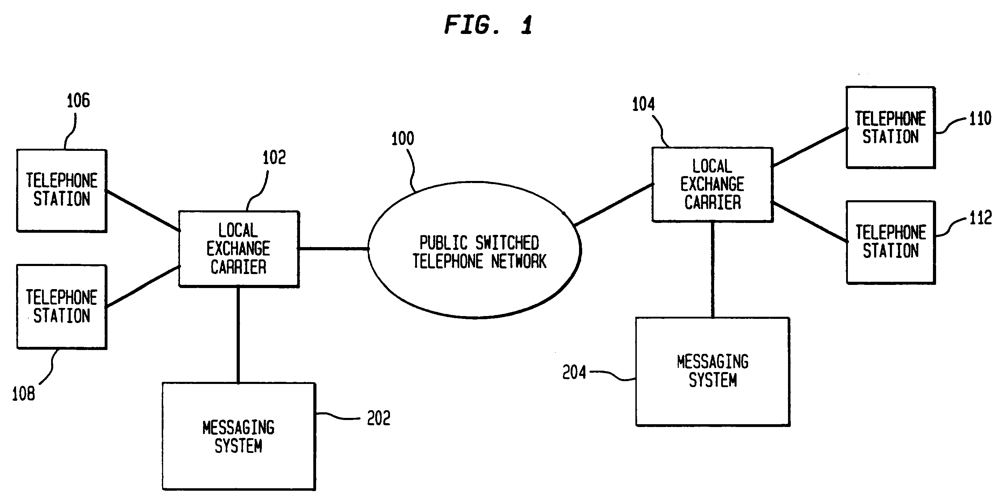

Figure 1 shows a telephone system having local exchange carriers 102 and 104 connected to a public switched telephone network 100. Telephone stations 106 and 108 are connected to the local exchange carrier 102 and telephone stations 110 and 112 are connected to local exchange carrier 104. Messaging systems 202 and 204 are coupled to the local exchange carriers 102 and 104, respectively.

The messaging systems 202 and 204 manage mailboxes for all the telephone stations that are connected to each of the respective local exchange carriers 102 and 104, respectively. Thus, the messaging system 202 manages mailboxes associated with the telephone stations 106 and 108 that are connected to the local exchange carrier 102 and the messaging system 204 manages mailboxes for all the telephone stations 110 and 112 connected to the local exchange carrier 104.

The messaging systems 202 and 204 are associated with geographical locations as are local exchange carriers 102 and 104. However, other organizations may also be possible such as centralizing the message systems 202 and 204 into one message system connected directly to the public switch telephone network 100. The organization of the messaging systems 202 and 204 will depend on the technical and financial details of a particular situation.

If a called party at the telephone station 108 is already associated with a mailbox in the messaging system 202, then the local exchange carrier 102 can switch a call from a calling party to the messaging system 202 when the call from the calling party to the called party is not answered. The messaging system 202 connects to the calling party and stores a message from the calling party in the mailbox that is associated with the called party. The called party associated with the telephone station 108, at a later time, may call the messaging system 202 from anywhere to retrieve the message from the mailbox.

If a mailbox is not associated with the called party and the calling party wishes to leave a message for the called party, then the messaging system 202 creates a mailbox for the called party and stores the message from the calling party in the created mailbox. Thus, in accordance with the invention, the messaging system 202, 204 creates a mailbox on demand and makes available a messaging service to all prospective users without having to pre-establish mailboxes and incur the up-front investment costs. Mailboxes are only created when a calling party desires to leave a message for a called party who does not have a mailbox. It will be shown later that mailboxes may be created for calling parties who want to use the messaging system to send store-and-forward messages. A maximum possible user community is obtained while system resources are invested only based on usage.

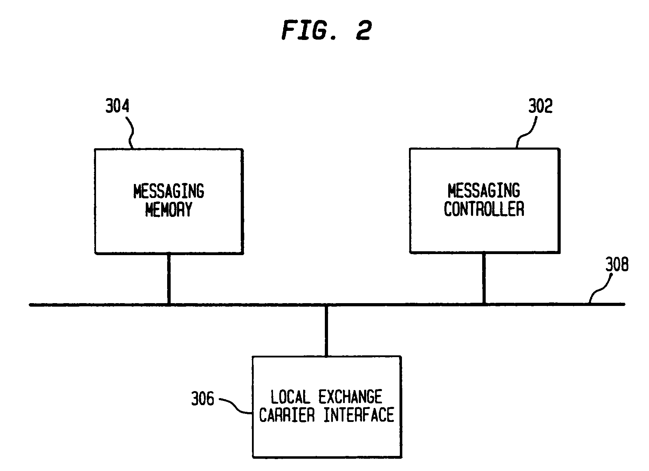

Figure 2 shows that the messaging system 202, 204 includes a messaging controller 302, a messaging memory 304 and an interface 306. All of these components are interconnected by signal bus 308. The interface 306 is coupled to the local exchange carrier 102, 104 or to the public switched network 100 in the event that messaging is to be centralized in the network.

There are two kinds of calling parties, a first calling party and a second calling party. The local exchange carrier 102, 104 may switch the first and second calling parties to the messaging system 202, 204 based on several reasons. As discussed above, the local exchange carrier 102 may switch a first calling party to the messaging system 202 if the telephone station of the called party such as the telephone station 108 is not answered or is busy. The local exchange carrier 102 may also switch the first calling party to the messaging system 202 in response to a control signal generated by the first calling party. The first calling party may generate the control signal by pressing a key on a keypad of the first calling party's telephone station, for example, or the telephone system may be preconfigured to switch the first calling party to the messaging system 202 based on predetermined criteria. Finally, the local exchange carrier 102 may switch a second calling party to the message system 202 because the second calling party called the message system 202.

When the local exchange carrier 102 receives a call from a first calling party for a called party and switches the first calling party to the messaging system 202, the message controller 302 connects to the first calling party through the interface 306. If the first calling party desires to leave a message for the called party, the messaging controller 302 interacts with the local exchange carrier 102 and receives information regarding the called party and the first calling party such as the respective telephone numbers.

After receiving the relevant information, the messaging controller 302 searches the messaging memory 304 for a called party mailbox based on the called party telephone number, for example. If a called party mailbox is found, then the messaging controller 302 prompts the first calling party to leave a message for the called party and stores the message in the called party mailbox. If a called party mailbox is not found, the messaging controller 302 creates a mailbox for the called party in the messaging memory 304, and then prompts the first calling party to leave a message for the called party and stores the message in the called party mailbox and ends the call with the first calling party. The order of the above process may be performed differently such as prompting the first calling party for a message before searching for a called party mailbox.

After going on-hook with respect to the first calling party, the messaging controller 302 alerts the called party that a new message has been left in the called party mailbox. If the called party is a subscriber to a messaging service such as a call-answering-service, the messaging controller 302 alerts the called party by, for example, changing the dial-tone of the called party or lighting a message indicator associated with the called party's telephone station 108, sending a page or placing an outcall to the called party. If the called party is not a subscriber to or a customer of the messaging service provided by the messaging system 202, 204, the messaging controller 302 may still make an outcall to the called party to alert the called party that a message is stored in a mailbox which has been created for the called party.

When a called party is not a customer of the messaging service, the messaging controller 302 makes contact via an outcall, for example, to the called party by calling the called party at preset intervals for a predetermined amount of time. If the called party answers the messaging controller 302's call, the messaging controller 302 informs the called party that a mailbox has been created and that a message has been stored for the called party in the mailbox. The messaging controller 302 may enable the called party to retrieve the message immediately or may leave instructions and information for the called party to review the message later from the called party mailbox. The information may include the messaging system telephone number, a password and/or personal identification number so that only authorized parties may access the message in the called party mailbox. The address or identification number of the new mailbox may be the telephone number of the called party.

When the called party decides to access the message stored in the called party mailbox, the called party becomes a second calling party and calls the messaging system 202 using the messaging system telephone number, such as an 800 number or a toll free local access number. When the call directed to the messaging system 202 is received, the local exchange carrier 102 connects the call to the messaging system 202.

The messaging controller 302 connects to the second calling party through the interface 306. If security information is required, such as a password or PIN (Personal Identification Number), the messaging controller 302 prompts the second calling party for the information. The second calling party responds to the prompt by entering the mailbox identification number (unless automatic number identification (ANI) is supplied) and password or personal identification number as appropriate. The messaging controller 302 retrieves the second calling party mailbox based on the information either automatically furnished or entered by the second calling party and outputs the message to the second calling party. If more than one message are in the mailbox, the messaging controller 302 offers all the messages to the second calling party. Of course, features such as playing only selected messages or outputting only the status of the mailbox such as the number of messages in the mailbox may be provided.

After each message is output to the second calling party, the messaging controller 302 queries whether the second calling party desires to send a reply message to the first calling party that left the message in the mailbox. If the second calling party wishes to send a reply message, the messaging controller 302 saves the reply message and sends the reply message to the first calling party that left the message at a later time.

The messaging controller 302 sends the reply message to the first calling party without requiring the second calling party to identify the mailbox of the first calling party. The messaging controller 302 stores the first calling party mailbox identification when the first calling party left the message. Thus, the mailbox address or telephone number of the first calling party need not be revealed to the second calling party. The second calling party can always send a message at a later time to one or more explicit mailbox addresses (such as telephone numbers).

The messaging controller 302 sends the reply messages to each of the respective first calling parties for each reply message in a process that is asynchronous to the interactions with the second calling party. Indeed, sending the reply message process may begin even before the second calling party goes on-hook. If the first calling party does not have a mailbox, the messaging system 202, 204 connected to the local exchange carrier 102, 104 serving the first calling party creates a mailbox for the first calling party, stores the received reply message in the created mailbox and alerts the first calling party that a message has been left in the newly created mailbox.

Normally, a mailbox is identified by a unique identifier such as a telephone number of a party. However, when a first calling party leaves a message for a called party, the first calling party may choose to leave a specific mailbox identification number for receiving a reply message. In this case, the messaging controller 302 saves the "reply" mailbox identification number and sends the reply message to the identified mailbox instead of the telephone number used by the first calling party to call the second calling party, for example. The "reply" mailbox identification number may be in the form of a telephone number.

A calling party may also send messages to parties without having received a message in a mailbox. Such a calling party is referred to as a third calling party. To send messages, the third calling party calls the messaging system 202. If ANI is presented, the messaging controller 302 searches the message memory for a corresponding mailbox. If a mailbox for the third calling party is not found, then the messaging controller 302 creates a new mailbox in the messaging memory 304 for the third calling party and invites the third calling party to use the mailbox. If the third calling party mailbox is found, then the messaging controller 302 prompts the third calling party to use the mailbox. The third calling party may send a message by pressing an appropriate key of the keypad, for example.

The third calling party may indicate a destination for the message by entering a telephone number or other identifier from either the keypad of a telephone station (DTMF) or by speaking the telephone number. If the third calling party chooses to speak the telephone number, the messaging controller 302 converts the third calling party speech into the destination telephone number by well known voice recognition methods.

The third calling party may also provide a name identifying a list of telephone numbers previously established in the messaging memory 304. The messaging controller 302 searches the messaging memory 304 for the identified list of telephone numbers and send the message to each of the telephone numbers in the list. Alternatively, the third calling party may also enter names of entries of a telephone directory that is pre-established in the messaging memory 304. In this case, the messaging controller 302 locates the telephone directory in the messaging memory 304 and builds a destination list of telephone numbers based on the names provided by the third calling party.

While the above discussion discloses the messaging system 202, 204 associated with a local exchange carrier 102, 104, the messaging system 202, 204 may also be associated with a long distance carrier (not shown). In this case, a long distance calling party may wish to leave a message for the called party. Similar features would be available through the long distance carrier as are described above for the local exchange carrier.

Further, send-a-message (store-and-forward) service or reply messages may also be directed to long distance destinations. In fact, any valid number such as a number under the North American Numbering Plan (NANP) which is within the serving area of the messaging service may be used. Local and Long Distance considerations are unimportant. Natural extensions to international sites using international numbering plans with country code prefixes can also be anticipated. In this way, the user community may be expanded to encompass the world community that is reachable by telephone or by systems providing equivalent reachability.

When the messaging controller 302 creates a mailbox for a called party, a first calling party or a third calling party, the mailbox persists in the messaging memory 304 for a predetermined amount of time such as 30, 60, 90 or 180 days. The mailbox is deleted from the messaging memory 304 if preset criteria are met such as no activity after the predetermined amount of time expires.

In some circumstances, the mailbox created by the messaging controller 302 persists only for a special delivery situation and the mailbox is deleted immediately after the message stored in the mailbox is "delivered". This situation occurs, for example, if the mailbox is associated with a telephone number that is outside the serving area of the messaging service. Delivery results from an outcall which is used to deliver (play) the message to the called party. In this case, the called party is not invited to become a customer of the messaging service nor, consequently, an active member of the messaging community.

Mailboxes are not restricted to be associated with only one telephone number. For example, a mailbox may be associated with a home telephone number, an office telephone number and a summer cottage telephone number. In addition, a group of people may wish to share a mailbox such as a club or partners of a small business.

A party may specifically designate a telephone number to be blocked from being associated with a mailbox. In this case, the messaging controller 302 will not create a mailbox for the telephone number even if a first calling party requests for a message to be stored.

Usually, a calling party is billed for leaving a message in a mailbox. Messaging, as described, is a sender paid service - like so many services in our society. Thus, the called party is not billed for the mailbox service. However, if the called party subscribes to a mailbox service, so that all telephone calls incident upon the called party telephone are answered by the called party's messaging service independent of whether or not the calling party is served by a messaging service, then the called party may be billed for the call answer service under a subscription agreement. In this way, a called party is not billed for a mailbox automatically created for the convenience of the calling party. Other billing mechanisms may also be implemented to further encourage wider acceptance and use of the messaging system 202.

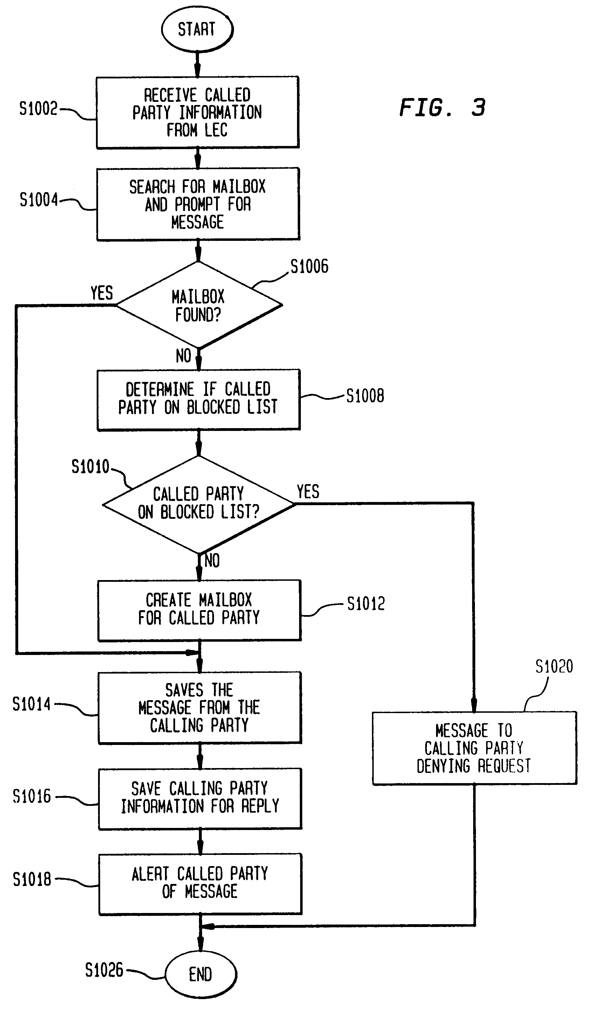

Figure 3 shows a flowchart of a messaging system process for a first calling party to leave a message for a called party. In step S1002, the messaging controller 302 receives the called party information such as the telephone number from the local exchange carrier 102, for example. Then the messaging controller 302 goes to step S1004. In step S1004, the messaging controller 302 searches the messaging memory 304 for a mailbox that is associated with the called party based on the telephone number, for example. Then the messaging controller 302 goes to step S1006. In step S1006, the messaging controller 302 goes to step S1014 if a called party mailbox is found in the messaging memory 304. Otherwise, the messaging controller 302 goes to step S1008.

In step S1008, the messaging controller 302 determines if the called party is on the blocked list. A called party self-selects to be placed on the blocked list. When on the blocked list, a mailbox should not be automatically created for the telephone number. For example, a subscriber may not wish a mailbox to be created. Then the messaging controller 302 goes to step S1010. In step S1010, the messaging controller 302 goes to step S1020 if the called party is on the blocked list. Otherwise, the messaging controller goes to step S1012.

In step S1020, the messaging controller 302 sends a message to the first calling party indicating that a message cannot be left for the called party at this telephone number and goes on-hook with respect to the first calling party. Then, the messaging controller 302 goes to step S1026 and ends the process.

In step S1012, the messaging controller creates a called party mailbox and goes to step S1014. In step S1014, the messaging controller 302 prompts for, receives and stores the message from the first calling party and goes to step S1016. In step S1016, the messaging controller 302 saves the first calling party information in the mailbox in preparation for a possible reply message. If the first calling party indicates a specific mailbox identification for a reply, the messaging controller 302 saves this special mailbox "reply" identification information in the mailbox instead of the first calling party's telephone number. Then the messaging controller 302 goes on-hook with respect to the first calling party and goes to step S1018.

In step S1018, the messaging controller 302 alerts the called party that a message is stored in the called party mailbox. Then the messaging controller 302 goes to step S1026 and ends the process. While step S1018 is shown between steps S1016 and S1026, step S1018 may be executed asynchronously relative to all other steps S1002-S1016 and S1020 of the process. The messaging controller 302 may alert the called party at anytime after storing the message from the first calling party in the mailbox.

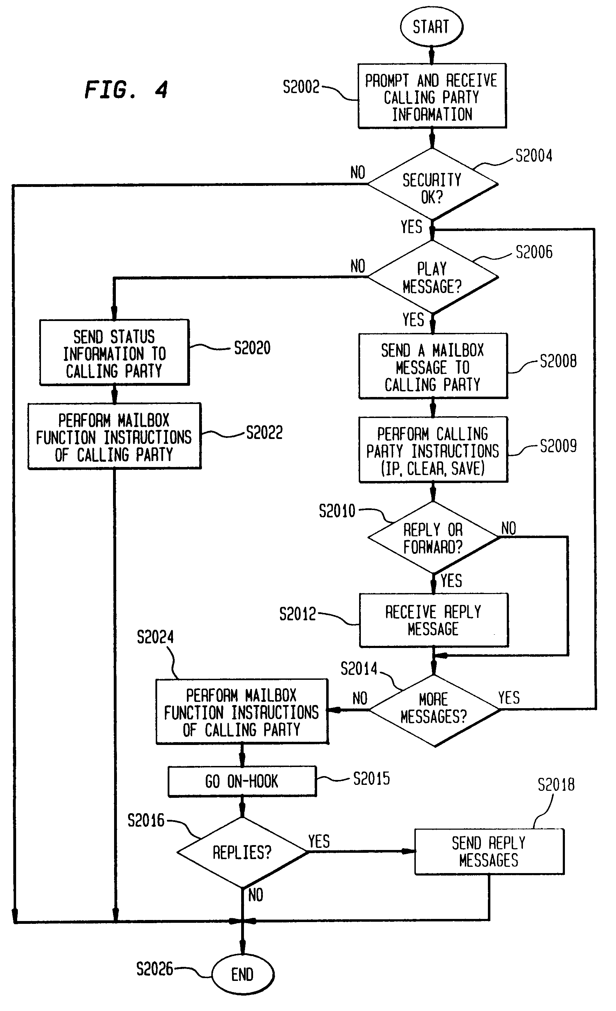

Figure 4 shows a process of the messaging controller 302 for receiving a call from a second calling party to retrieve messages stored in a mailbox. In step S2002, the messaging controller 302 prompts and receives information from the second calling party such as the mailbox identification number (or ANI if the calling party is calling from home) and a password or personal identification number. Then the messaging controller 302 locates the identified mailbox and verifies whether the security information entered by the second calling party such as a password or a personal identification number is correct. Then the messaging controller 302 goes to step S2004. In step S2004, if the security information entered by the second calling party is incorrect, the messaging controller 302 allows several retries and then goes to step S2026 and ends the message retrieving process. Otherwise, the messaging controller 302 goes to step S2006.

In step S2006, the messaging controller 302 goes to step S2020 if the information entered by the second calling party indicates that the second calling party does not wish to listen to the messages stored in the mailbox but merely desires to receive status information regarding the mailbox such as the number of new and old messages stored in the mailbox. Otherwise, the messaging controller 302 goes to step S2008.

In step S2020, the messaging controller 302 sends the status information to the second calling party and goes to step S2022. In step S2022, the messaging controller 302 allows the second calling party to execute optional functions of the mailbox such as: play, clear or save a message; send a message; adjust personalization features of the mailbox; engage in any other mailbox supported activity; or end the process. When the second calling party ends the process, the messaging controller 302 goes to step S2026 and ends the process.

In step S2008, the messaging controller 302 retrieves a message from the mailbox and sends the message to the second calling party. Then the messaging controller 302 goes to step S2009. In step S2009, the messaging controller 302 allows the second calling party to delete (clear) or save the message. Then the messaging controller goes to step S2010.

In step S2010, the messaging controller queries whether the second calling party would like to send a reply to the first calling party who left the message or forward the message to another party or parties. If the second calling party wishes to send a reply message or forward a copy of the message, the messaging controller 302 goes to step S2012. Otherwise, the messaging controller goes to step S2014.

In step S2012, the messaging controller 302 receives the reply message from the second calling party. The messaging controller 302 addresses the reply message based on destinations supplied by the second calling party and/or based on destinations saved in the mailbox, and goes to step S2014.

In step S2014, the messaging controller 302 determines whether there are more messages in the mailbox. If there are more messages in the mailbox, the messaging controller 302 goes to step S2006. Otherwise, the messaging controller goes to step S2024. In step S2024, the messaging controller 302 allows the second calling party to execute optional functions of the mailbox such as: play, clear or save a message; send a message; adjust personalization features of the mailbox; engage in any other mailbox supported activity. When the second calling party completes executing the optional functions, the messaging controller 302 goes to step S2015.

In step S2015, the messaging controller 302 goes on-hook with respect to the second calling party and then goes to step S2016. In step S2016, the messaging controller 302 determines whether the second calling party left any reply (or forward to) messages. If no reply or forward to messages are left, the messaging controller 302 goes to step S2026 and ends the process. Otherwise, the messaging controller 302 goes to step S2018. In step S2018, the messaging controller 302 sends the reply (or "forward to") messages of the second calling party to the respective calling parties that previously left messages based on the information saved when the messages were left. Then the messaging controller goes to step S2026 and ends the process.

Steps S2016 and S2018 may be performed asynchronously with respect to the other steps of the above process. The flowchart shown in Figure 4 depicts the logical process only. Thus, the messaging controller 302 may begin sending the reply or forward-to messages immediately even before the second party goes on-hook, or the messaging controller 302 may wait until a later time. For example, reply or forward-to messages may be delayed until the messaging controller 302 is less busy or until a lower transmission cost is available.

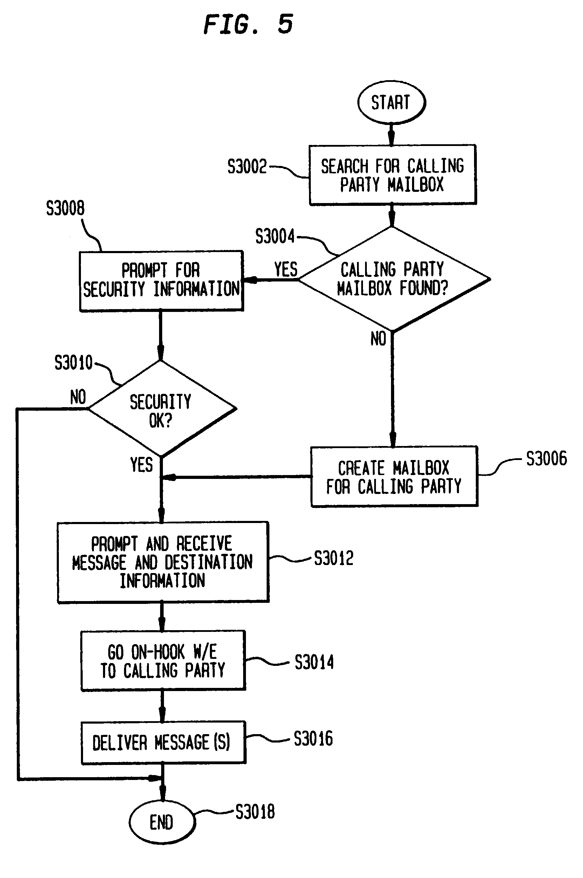

Figure 5 is a flowchart of a messaging controller process for send-a-message service after a third calling party is connected to the messaging controller 302. In step S3002, the messaging controller 302 searches for a mailbox associated with the third calling party and then goes to step S3004. In step S3004, the messaging controller 302 goes to step S3008 if a mailbox is found for the third calling party. Otherwise, the messaging controller 302 goes to step S3006. In step S3006, the messaging controller 302 creates a mailbox for the third calling party and then goes to step S3012.

In step S3008, the messaging controller 302 prompts the third calling party for security information such as a password or a personal identification number and then goes to step S3010. In step S3010, the messaging controller goes to step S3018 if, after several retries, the security information entered by the third calling party is incorrect. Otherwise, the messaging controller goes to step S3012.

In step S3012, the messaging controller 302 prompts and receives the message and destination information from the third calling party. The destination information can be a telephone number, multiple telephone numbers, a name identifying a list of telephone numbers that is stored in the messaging memory 304 or names of entries of a telephone directory that is stored in the messaging memory 304. Then, the messaging controller goes to step S3014.

In step S3014, the messaging controller 302 goes on-hook with respect to the third calling party and then goes to step S3016. In step S3016, the messaging controller 302 sends the message to the destinations indicated by the destination information entered by the third calling party. After the messaging controller 302 delivers the message to the destination locations the messaging controller 302 goes to step S3018 and ends the process.

Step S3016 may be performed asynchronously relative to all the other steps of the process. Thus, the message may be delivered immediately after the message and destination information is received even before the third calling party goes on-hook or the message may be delivered at a later more convenient time.

While this invention has been described in conjunction with specific embodiments thereof, it is evident that many alternatives, modifications and variations will be apparent to those skilled in the art. Accordingly, preferred embodiments of the invention as set forth herein are intended to be illustrative, not limiting. Various changes may be made without departing from the spirit and scope of the inventions as defined in the following claims.

Where technical features mentioned in any claims are followed by reference signs, those reference signs have been included for the sole purpose of increasing the intelligibility of the claims and accordingly, such reference signs do not have any limiting effect on the scope of each element identified by way of example by such reference signs.

## Claims

1. A method for operation of a messaging system, comprising:
receiving a message for a destination identified with the message but not having a mailbox to store the message;
creating a mailbox in a memory; and
storing the message in the mailbox.

2. The method of claim 1, wherein if a first calling party calls a called party and leaves the message for the called party, then the mailbox is associated with the called party.

3. The method of claim 2, further comprising: alerting the called party if a new message is stored in the mailbox associated with the called party.

4. The method of claim 3, wherein the messaging system alerts the called party by at least making an outcall to the telephone number of the called party.

5. The method of claim 4, wherein the outcall is made at a preset interval for a predetermined amount of time.

6. The method of claim 2, further comprising:
playing at least one message stored in a called party mailbox identified by a mailbox identifier when a second calling party calls the messaging system requesting the messaging system to play the at least one message stored in the called party mailbox, the second calling party being the called party called by the first calling party.

7. The method of claim 6, further comprising:
prompting the second calling party for a reply message that corresponds to the at least one message stored in the called party mailbox after playing one of the at least one message stored in the called party mailbox;
receiving the reply message from the second calling party; and
sending the reply message to the first calling party that left the one of the at least one stored message in the called party mailbox.

8. The method of claim 7, wherein the messaging system saves information relating to the first calling party when the first calling party left the at least one message in the called party mailbox and sends the reply message to the first calling party based on the saved information relating to the first calling party.

9. The method of claim 8, wherein the saved information relating to the first calling party includes at least one of:
a reply address;
a first calling party telephone number; and
an identifier of a mailbox.

10. The method of claim 6, wherein the called party mailbox is deleted from the memory after playing the at least one message if the mailbox identifier is a telephone number not within a service area of the messaging system.

11. The method of claim 1, wherein if a calling party calls the messaging system and leaves the message, then the mailbox is associated with the calling party, or
wherein the mailbox is not created in the memory if the destination is a telephone number blocked by an owner of the telephone number, or
wherein the created mailbox is deleted from the memory if the mailbox is not accessed within a preset amount of time, or
wherein the messaging system is coupled through an external interface to at least one of a local exchange carrier and a long distance carrier.

12. The method of claim 11, further comprising:
prompting the calling party for destination information when the calling party calls the messaging system and leaves the message in a calling party mailbox identified by a mailbox identifier entered by calling party; and
sending the message to at least one destination based on the destination information.

13. The method of claim 12, wherein the destination information comprises at least one of:
a mailbox identifier;
a name of a list of mailbox identifiers stored in the memory; and
names of entries of a telephone directory which is stored in the memory.

14. The method of claims 6 or 12, wherein the mailbox identifier includes at least one of:
a telephone number;
an identification number;
an identification name;
a password; and
a personal identification number.

15. The method of claim 2 or 12, wherein the mailbox is identified by a plurality of telephone numbers and a mailbox identifier.

16. The method of claims 15, wherein the plurality of telephone numbers include at least one of:
a home telephone number;
a business telephone number; and
a seasonal residence telephone number.
